(19) Europäisches Patentamt
European Patent Office
Office européen des brevets

(11) **EP 3 629 148 A1**

(12) **EUROPÄISCHE PATENTANMELDUNG**

(43) Veröffentlichungstag:
**01.04.2020  Patentblatt 2020/14**

(51) Int Cl.:
***G06F 7/49*** *(2006.01)*

(21) Anmeldenummer: **18000758.5**

(22) Anmeldetag: **25.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Scharrer, Christian**
**90765 Fürth, Bayern (DE)**

(72) Erfinder: **Scharrer, Christian**
**90765 Fürth, Bayern (DE)**

(54) **TERNÄRER RECHENAUTOMAT**

(57) Als Weiterentwicklung des binären Rechenautomaten welcher von Alan Turing und Konrad Zuse Mitte des 20. Jahrhunderts entwickelt wurde basiert der im folgenden skizzierte ternäre Rechenautomat auf einer echt ternären Mathematik, welche in der Lage ist unabhängig voneinander drei Dimensionen zu erkennen.

Gegenstand des Patents ist nicht die mathematische Basis sondern die Anwendung ternärer Mathematik auf eine elektrische Schaltung die wiederum Grundstein für einen Rechenautomat ist.

Die Schaltskizze stellt das Prinzip der ternären Signalverarbeitung dar. Dies ist der Patentanspruch.

EP 3 629 148 A1

**Beschreibung**

Jeder Computer der aktuell - Stand 2018 - für Privatpersonen und Unternehmen zu erwerben ist basiert auf Binärmathematik und der elektrotechnischen Umsetzung von Konrad Zuse und Alan Turing.[1,2] Kernaussage der Binärmathematik ist die Definition von zwei ein-eindeutigen Ausgangszuständen welche keines weiteren Beweises bedürfen:

- 0: es fließt kein Strom,

- 1: es fließt Strom. (1.1)

Diese Erklärung deutet die elektrische Umsetzung mit an: Binärmathematik ist eine Sprache welche die Kommunikation Mensch-Maschine vereinfacht und formalisiert
Daraus ergeben sich zwei Konsequenzen.

| | | |
|---|---|---|
| Konsequenz 1: | Probleme der Realität sind auf binäre Situationen zu abstrahieren als Erfordernis der maschinellen Bearbeitung. | (1.2) |
| Konsequenz 2: | Dezimalsysteme für mathematische Berechnungen durch Computer sind per se ungeeignet, alternatives Zahlensystem: das Binärsystem. | (1.3) |

Einige Fakten zum Binärsystem sind im Folgenden angeführt.

| | |
|---|---|
| Jede Information wird quantitativ dargestellt, jede Zahl wird binär ausgedrückt Es ergibt sich eine Abfolge von 0 und 1, fast beliebiger Länge und Abfolge. | (1.4) |
| Theoretische Ausgestaltung von Algorithmen erfolgt u.a. mittels sog. Entscheidungsbäume. Diese entstammen der mathematischen Disziplin Logik. | (1.5) |
| Die angesprochene Konsequenz 2 erfordert Adressierbarkeit jedes Tupels eines Entscheidungsbaumes. Diese Adressen werden wiederum in Datenspeichern on- und offline abgelegt | (1.6) |

Besagte Konsequenzen schaffen Herausforderungen und Probleme. Zwei sind hier angeführt:

| | | |
|---|---|---|
| Problem A: | Realität kennt beliebig viele ternäre, quartäre Probleme. | (1.7) |
| Problem B: | Binär kann auf ternär / quartär approximiert werden, mit echtem Informationsverlust als Konsequenz. | (1.8) |
| Problem B ist die These der Veröffentlichung und wird bewiesen. | | (1.9) |

---

[1] https://de.wikipedia.org/wiki/Konrad Zuse sowie https://de.wikipedia.org/wiki/Aian Turing
[2] Lexikon der Mathematik, Walz et al., Band 1, 2. Auflage, 2017, S. 220 - 223

- Diese Seite ist Teil einer in Kürze erscheinenden wissenschaftlichen Veröffentlichung. Für die Beschreibung des Patents ist sie nachrangig. Daher ist der Inhalt hier nicht aufgelistet. -
- Diese Seite ist Teil einer in Kürze erscheinenden wissenschaftlichen Veröffentlichung. Für die Beschreibung des Patents ist sie nachrangig. Daher ist der Inhalt hier nicht aufgelistet. -

Umsetzungsproblem 1: Binär erhöht sich die Komplexität je Rechenschritt immer um den Faktor 2. (1.15)

Ternär erhöht sich die Komplexität je Rechenschritt um Faktor 3.

Die dargestellten Entscheidungslogiken lassen sich alternativ mittels Reihen beschreiben. (1.16)

Binäre Reihe: $\prod_{n=0}^{-\infty} 2^n$

Ternäre Reihe: $\prod_{n=0}^{+\infty} 3^n$

Es finden an dieser Stelle geometrische Reihen Anwendung nachdem Ausgangszustände in Folge Ein-Eindeutigkeit nicht negierbar sind.

Adressierbarkeit in binären und ternären Systemen ist dagegen eine arithmetische Reihe. (1.17)

Binäre Adressen: $\sum_{n=0}^{+\infty} 2^n$

Ternäre Adressen: $\sum_{n=0}^{+\infty} 3^n$

Konsequenz 3: Adressen sind nicht gleich Informationsmenge. Es gilt immer -

Originäre Informationsmenge > Anzahl Adressen, da $\prod_{n=0}^{+\infty} x^n > \sum_{n=0}^{+\infty} x^n$ (1.18)

Q.E.D.

- Diese Seite ist Teil einer in Kürze erscheinenden wissenschaftlichen Veröffentlichung. Für die Beschreibung des Patents ist sie nachrangig. Daher ist der Inhalt hier nicht aufgelistet. -
- Diese Seite ist Teil einer in Kürze erscheinenden wissenschaftlichen Veröffentlichung. Für die Beschreibung des Patents ist sie nachrangig. Daher ist der Inhalt hier nicht aufgelistet. -
- Diese Seite ist Teil einer in Kürze erscheinenden wissenschaftlichen Veröffentlichung. Für die Beschreibung des Patents ist sie nachrangig. Daher ist der Inhalt hier nicht aufgelistet. -
- Diese Seite ist Teil einer in Kürze erscheinenden wissenschaftlichen Veröffentlichung. Für die Beschreibung des Patents ist sie nachrangig. Daher ist der Inhalt hier nicht aufgelistet. -

**4 Grobe Skizzierung einer ternären Maschinensprache**

Ausgangsproblem: Ternäre Logik reell nicht beherrschbar, da Maschine im Binärmodus nur zwei Zustände kennt

(1) Strom an,
(2) Strom aus. (4.1)

Ausweg: Jeder höherdimensionale Zustand mit n = 0, 1, ..., $+\infty$ für $n \geq 2$ erfordert komplexe Räume $C$. (4.2)

Konsequenz 4: Der komplexe Raum eröffnet sich bei umgekehrter Polung. In der Physik entspricht dies negativen Strömen als Ausfluss wechselnder elektromagnetischer Felder mit wechselndem Pol.

Entsprechend Taschenbuch der Mathematik[3] bieten sich Quaternionen-Räume für die Beschreibung des komplexen Raumes mit n = 0, 1, 2 an. (4.3)

Mathematisch postuliert: $\omega + ix + jy + kz$ mit

$\omega$, x, y, z $\in R^+$, O, $R^-$ und mit

i. j, k $\in C$. (4.4)

Mögliche Rechenoperationen für den Quaternionen-Raum folgen Taschenbuch der Mathematik, Bronstein et al., S. 298-302, 9. Auflage, 2013. Gleiche Quelle, S. 299, bietet die Möglichkeit mittels Verwendung des Nabla-Operators jeden Punkt im komplexen Raum $C$ zu definieren:

$$\nabla \vec{v} = -\frac{\partial v1}{\partial x} - \frac{\partial v2}{\partial y} - \frac{\partial v3}{\partial z} + \vec{\imath}\left(\frac{\partial v3}{\partial y} - \frac{\partial v2}{\partial z}\right) + \vec{\jmath}\left(\frac{\partial v1}{\partial z} - \frac{\partial v3}{\partial x}\right) + \vec{k}\left(\frac{\partial v2}{\partial x} - \frac{\partial v1}{\partial y}\right) \quad (4.5)$$

Mit komplexen Einheitsmatrizen,

$$i = \begin{pmatrix} 0 & -1 & 0 & 0 \\ 1 & 0 & 0 & 0 \\ 0 & 0 & 0 & 1 \\ 0 & 0 & -1 & 0 \end{pmatrix}, \; j = \begin{pmatrix} 0 & 0 & -1 & 0 \\ 0 & 0 & 0 & -1 \\ 1 & 0 & 0 & 0 \\ 0 & 1 & 0 & 0 \end{pmatrix}, \; k = \begin{pmatrix} 0 & 0 & 0 & 1 \\ 0 & 0 & -1 & 0 \\ 0 & 1 & 0 & 0 \\ -1 & 0 & 0 & 0 \end{pmatrix} \; \forall\, Ströme\, In \geq 0\, mit\, n \in$$

$$[-\infty; +\infty];$$

muss für Wechselfelder mit alternierender Polung gelten:

$$-i = \begin{pmatrix} 0 & 1 & 0 & 0 \\ -1 & 0 & 0 & 0 \\ 0 & 0 & 0 & -1 \\ 0 & 0 & 1 & 0 \end{pmatrix}, \; -j = \begin{pmatrix} 0 & 0 & 1 & 0 \\ 0 & 0 & 0 & 1 \\ -1 & 0 & 0 & 0 \\ 0 & -1 & 0 & 0 \end{pmatrix}, \; -k = \begin{pmatrix} 0 & 0 & 0 & -1 \\ 0 & 0 & 1 & 0 \\ 0 & -1 & 0 & 0 \\ 1 & 0 & 0 & 0 \end{pmatrix}, \; \forall\, Ströme\, In < 0\, mit\, n \in$$

$$[-\infty; +\infty]; \hspace{8cm} (4.6)$$

[3] Taschenbuch der Mathematik, Bronstein et al., S. 298,9. Auflage, 2013

Postulat: (4.5) und (4.6) implizieren idealisierte verlustfreie Zustände, wie z.B. in Supraleitern.

- Teile dieser Seite sind Teil einer in Kürze erscheinenden wissenschaftlichen Veröffentlichung. Für die Beschreibung des Patents ist sie nachrangig. Daher ist der Inhalt hier nicht aufgelistet. -

Im Binärsystem läge bei perfekter Berechnung Defragmentierung und Informationsverlust vor. Das Ternärsystem umgeht dieses Problem für Abbildungen der Realität bis einschließlich $R3$:

$$
\begin{array}{ccccccc}
2^0 & \simeq & 1 & i.i.d. & 3^0 & = & 1; \\
\\
2^1 & = & 2 & < & 3^1 & = & 3; \\
\\
2^2 & = & 4 & < & 3^2 & = & 9; \\
\\
\ldots
\end{array}
$$

Grad Informationsverlust binär vs. ternär

$$\hspace{10cm} (4.8)$$

- Diese Seite ist Teil einer in Kürze erscheinenden wissenschaftlichen Veröffentlichung. Für die Beschreibung des Patents ist sie nachrangig. Daher ist der Inhalt hier nicht aufgelistet. -

**Patentansprüche**

**5. Schaltskizze eines ternären Rechenautomaten**

Aus folgender Schaltskizze mit kurzer Beschreibung ergibt sich der Patentanspruch.

Abhängig vom Informationbedürfnis und den Geheimhaltungsvorschriften der Patentbehörden im Patentprüfungsprozess kann hier weiter detailliert werden.

(5.1)

Ein einkommendes Signal lässt sich mit binär reell R und mit komplex ternär $C$ aufspalten.      (5.2)
(5.2) ist ein Novum in der Elektrotechnischen Signalverarbeitung für Rechenmaschinen. Der Schaltplan zeigt eine Möglichkeit für parallele Signalverarbeitung in drei Dimensionen.

- Teile dieser Seite sind Teil einer in Kürze erscheinenden wissenschaftlichen Veröffentlichung. Für die Beschreibung des Patents ist sie nachrangig. Daher ist der Inhalt hier nicht aufgelistet. -

**Europäisches Patentamt**
**European Patent Office**
**Office européen des brevets**

# EUROPÄISCHER RECHERCHENBERICHT

**Nummer der Anmeldung**

EP 18 00 0758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Anonymous: "Ternary computer - Wikipedia", , 22. September 2018 (2018-09-22), XP055545359, Gefunden im Internet: URL:https://en.wikipedia.org/w/index.php?title=Ternary_computer&oldid=860749835 [gefunden am 2019-01-21] * das ganze Dokument * ----- | 1 | INV. G06F7/49 |
| A | Ashwin Dhande: "Ternary Digital System: Concepts and Applications", , 1. Oktober 2014 (2014-10-01), XP055545549, Gefunden im Internet: URL:https://www.researchgate.net/publication/266477093_Ternary_Digital_System_Concepts_and_Applications/download [gefunden am 2019-01-22] * Kapitel 3 * ----- | 1 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 4. März 2019 | Kamps, Stefan |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **WALZ et al.** Lexikon der Mathematik. 2017, vol. 1, 220-223
- **BRONSTEIN et al.** Mögliche Rechenoperationen für den Quaternionen-Raum folgen Taschenbuch der Mathematik. 2013, 298-302
- **BRONSTEIN et al.** Taschenbuch der Mathematik. 2013, 298